# EUROPEAN PATENT APPLICATION

(11) **EP 4 848 174 A1**
(43) Date of publication of application: **02.12.2026**
(21) Application number: 26180509.7
(22) Date of filing: 22.05.2026
(51) Int. Cl.: G06Q 10/0833

(54) **SYSTEM AND METHOD FOR TRACKING COUPLING OF SHIPPING EQUIPMENT**

(30) Priority: 30.05.2025 US 202519224045
(71) Applicant: BlackBerry Limited, Waterloo, Ontario N2K 0A7 (CA)
(72) Inventor: JOCKSCH, Adam Paul, Waterloo, Ontario, N2K 0A7 (CA); FULESHWAR PRASAD, Mahendra, Waterloo, ON, N2K 0A7 (CA); JANTZI, Jason Wayne, Waterloo, ON, N2K 0A7 (CA)
(74) Representative: MERH-IP Matias Erny Reichl Hoffmann Patentanwälte PartG mbB

(57) **Abstract**

A device for tracking coupling of shipping equipment includes a receiver configured to receive a first signal from a second device. The first signal comprises packets separated by a time interval. The device further includes a processor configured to calculate a metric of variability of the packets, and determine based on the metric of variability whether the first signal is being transmitted from a location that is maintaining continuous relative distance to the device. The device further includes a transmitter configured to transmit a second signal to a network. The second signal comprises information related to whether the first signal is being transmitted from the location that is maintaining continuous relative distance to the device.

## Description

### BACKGROUND

Transport chassis may be configured to accept intermodal shipping containers such that containers on a container ship that arrive in port may be moved onto the transport chassis. The transport chassis may then be driven by a truck (e.g., a tractor) to a final destination of the container. Such containers may also be transported on train cars to a railyard. The containers may be removed from the train car and moved from the train car onto a transport chassis. The transport chassis may then be driven by a truck to a final destination of the container. Containers can likewise be picked up and installed on a transport chassis and driven by a truck to a railyard or port. The container may then be removed from the transport chassis and placed upon a train car or on a container ship for transport.

### SUMMARY

In some embodiments, a device for tracking coupling of shipping equipment comprises: a receiver configured to receive a first signal from a second device, wherein the first signal comprises packets separated by a time interval; a processor configured to calculate a metric of variability of the packets, and determine based on the metric of variability whether the first signal is being transmitted from a location that is maintaining continuous relative distance to the device; and a transmitter configured to transmit a second signal to a network, wherein the second signal comprises information related to whether the first signal is being transmitted from the location that is maintaining continuous relative distance to the device.

In some embodiments, the second device comprises a tag affixed to a truck, the device is affixed to a chassis, the metric of variability comprises a metric of variability of signal strength of the first signal, and the determining based on the metric of variability whether the first signal is being transmitted from the location that is maintaining continuous relative distance to the device comprises determining that the chassis is attached to the truck in response to the metric being less than a threshold. In some embodiments, the tag is configured to send the first signal in response to acceleration of the tag exceeding a threshold. In some embodiments, the network is configured to receive the second signal, determine, based on the information, whether the chassis being coupled to the truck is in accordance with a logistical plan, in response to determining that the chassis being coupled to the truck is not in accordance with the logistical plan, generate an alert, and transmit the alert to a terminal associated with a driver of the truck. In some embodiments, the packets comprise groups of packets that are spaced apart from each other by a time period greater than the time interval by at least an order of magnitude. In some embodiments, the metric of variability comprises a maximum value of a set of variances, wherein each variance of the set of variances is a variance of signal strength of packets of one of the groups of packets. In some embodiments, the metric of variability comprises an average value of a set of variances, wherein each variance of the set of variances is a variance of signal strength of packets of one of the group of packets.

In some embodiments, a method for tracking coupling of shipping equipment comprises: receiving, by a receiver, a first signal from a second device, wherein the first signal comprises packets separated by a time interval; calculating, by a processor, a metric of variability of the packets; determining, by the processor, based on the metric of variability, whether the first signal is being transmitted from a location that is maintaining continuous relative distance to the device; and transmitting, by a transmitter, a second signal to a network, wherein the second signal comprises information related to whether the first signal is being transmitted from the location that is maintaining continuous relative distance to the device.

In some embodiments, the second device comprises a tag affixed to a truck, the device is affixed to a chassis, the metric of variability comprises a metric of variability of signal strength of the first signal, and the determining based on the metric of variability whether the first signal is being transmitted from the location that is maintaining continuous relative distance to the device comprises determining that the chassis is attached to the truck in response to the metric being less than a threshold.

In some embodiments, the tag is configured to send the signal by measuring, by an accelerometer of the tag, an acceleration of the tag, generating the packets, by a processor of the tag, in response to the acceleration exceeding a threshold, and sending the signal by a transmitter of the tag.

In some embodiments, the calculating of the metric of variability comprises calculating, by the device, the metric of variability, or transmitting, by the device, the metric of variability to a server, and calculating, by the server, the metric of variability. In some embodiments, the method further comprises determining whether the chassis being coupled to the truck is in accordance with a logistical plan by ascertaining, by a server, whether the logistical plan includes the chassis being coupled to the truck at a present time. In some embodiments, the method further comprises transmitting, by the server, an alert to a terminal associated with a driver of truck, in response to determining that the logistical plan does not include the chassis being coupled to the truck at the present time. In some embodiments, the tag sends the signal by sending, by a transmitter of the tag, groups of packets that are spaced apart from each other by a time period greater than the time interval by at least an order of magnitude, in response to detecting that an acceleration of the tag exceeds a threshold. In some embodiments, the metric of variability comprises a maximum value of a set of variances, wherein each variance of the set of variances is a variance of signal strength of packets of one of the groups of packets. In some embodiments, the metric of variability comprises an average value of a set of variances, wherein each variance of the set of variances is a variance of signal strength of packets of one of the group of packets.

In some embodiments, a system for tracking coupling of shipping equipment comprises: a tag configured to be affixed to a truck, the tag comprising: an accelerometer configured to measure acceleration of the tag; a first processor configured to generate packets separated by a time interval, in response to the acceleration exceeding a threshold; and a first transmitter configured to transmit a first signal, wherein the first signal comprises the packets separated by the time interval; a device configured to be affixed to a chassis, the device comprising: a receiver configured to receive the first signal; a second processor configured to calculate a metric of variability of signal strength of the packets, and determine that a chassis to which the device is affixed is coupled to the truck, in response to determining that the metric is less than a threshold; and a second transmitter configured to transmit a second signal, wherein the second signal comprises information that the chassis is coupled to the truck.

In some embodiments, the system further comprises a terminal configured to receive the information, and in response to receiving the information, display an indication that the chassis is coupled to the truck. In some embodiments, the system further comprises a network, wherein the network is configured to: receive the second signal comprising the information, determine whether the chassis being coupled to the truck is in accordance with a logistical plan, and in response to determining that the chassis being coupled to the truck is not in accordance with the logistical plan, generate an alert. In some embodiments, the alert is transmitted from the network to a terminal associated with a driver of the truck.

These and other features will be more clearly understood from the following detailed description taken in conjunction with the accompanying drawings and claims.

### BRIEF DESCRIPTION OF THE DRAWINGS

For a more complete understanding of the present disclosure, reference is now made to the following brief description, taken in connection with the accompanying drawings and detailed description, wherein like reference numerals represent like parts.
FIG. 1 is an illustration of a chassis with a device and a truck with a tag, according to an embodiment of the disclosure.
FIG. 2 is a block diagram of a tag of the system, according to an embodiment.
FIG. 3 is a block diagram of a device of the system, according to an embodiment.
FIG. 4 is a block diagram of a system for tracking coupling of shipping equipment, according to an embodiment.
FIG. 5 is a flow diagram of a method for tracking coupling of shipping equipment, according to an embodiment.
FIG. 6 is a conceptual illustration of the data packets sent by the tag, according to an embodiment.
FIG. 7 is a block diagram of a system for tracking coupling of shipping equipment, according to an embodiment.
FIG. 8 is a block diagram of a computer system, according to an embodiment.

### DETAILED DESCRIPTION

It should be understood at the outset that although illustrative implementations of one or more embodiments are illustrated below, the disclosed systems and methods may be implemented using any number of techniques, whether currently known or not yet in existence. The disclosure should in no way be limited to the illustrative implementations, drawings, and techniques illustrated below, but may be modified within the scope of the appended claims along with their full scope of equivalents.

In conventional tracking systems, the chassis may be associated with trucks statically (e.g., by a user of a web interface) so that the data collected from devices installed on the chassis and trucks can be correlated. However, it is not always feasible to affix every asset with a fully-featured GPS tracker, nor is it always feasible for correlation between assets to be statically determined ahead of time. The system and method of the present disclosure may address one or more of these issues.

The system and method of the present disclosure may provide for the dynamic association of trucks to chassis that are already affixed with tracking devices. The dynamic association may provide confirmation that the fully-tracked chassis (via an installed tracking device) has been picked up by the correct truck/tractor. As used herein, the term "shipping equipment" means any asset involved in shipping. Shipping equipment may include trucks and chassis. As used herein, the term "truck" or "tractor" means any vehicle capable of being coupled with a chassis. As used herein, the term "chassis" describes any structure capable of supporting a container for transport. The association may be both confirmation that the chassis is en route as well as an opportunity for the transport operators or customer to correct logistical errors (e.g., the truck has picked up the wrong chassis and/or container by mistake) before the truck has traveled any significant distance, ideally before the truck has even left the shipping yard. Advantageously, the customer may be provided with a notification that a tracked chassis has begun a trip. The notification may indicate which truck is towing the chassis.

Received signal strength indicator (RSSI) is a general measure of the quality of the radio frequency (RF) signal between two devices. RSSI values tend to be volatile and highly dependent on the environment in which the two devices are located, relative motion of the devices, and other factors. If a device attached to a chassis that is in motion senses another RF-transmitting device, such as a tag having an RF-transmitting device that is located on a truck, that is in fixed relative position to it over a period of multiple minutes, and this is the only such device in range, then this device is likely attached to a truck that has attached to and is towing the tracked chassis. If the RSSI of two devices, located in fixed relative position, is analyzed over a long period of time it may not be stable as the RF environment can change over time. This can manifest as a high statistical variance of the RSSI value, which can make it difficult in this application to tell if the relative position of the two devices is changing or static. If, however, the variance of the RSSI of the RF signal between two devices located in the same environment is calculated over a much shorter time window, e.g. 10 seconds, the effect of variations in the RF environment may be lessened. This can allow the use of the short-term analysis of the RSSI of RF communications between these two devices to identify other external factors of interest besides the general environment, specifically whether the two devices are in motion with respect to each other.

In some embodiments, this concept is implemented by having tags capable of transmitting RF packets (e.g., 10 packets) spaced at intervals (e.g., one second) every time period (e.g., every minute on-the-minute) while they are in a state of motion (e.g., as detected by an accelerometer on-board the tag). The device affixed to the chassis may in turn listen for such pulses being transmitted by the tags when it detects that it is in motion (detected in the same manner as the tags). For example, the device may listen for the pulses in response to detecting that the device is in motion based on accelerometer data (e.g., as detected by an accelerometer on-board the device). The device may listen aggressively for a duration (e.g., the first 15 minutes after motion is detected) in a manner that balances the quantity of data collected and power consumption by the device. Following that duration, the device may still periodically listen for RF packets with a reduced frequency.

The variance of the RSSI for these packets within each window (e.g., 10 second window) may be calculated. Tags with a consistently low variance across multiple such windows may be considered candidates for dynamic association with the asset tracked by the device. Tags with a high variance within each window or a range of variances across different windows may not be considered as candidates. This may be because if the RSSI of packets between a device and tag has low variability within each window, then it is more likely that the tag and the device are in fixed position relative to each other. Since the device and the tag may only listen and transmit, respectively, when motion or movement has been detected, a determination may be made that the tag is affixed to the truck that is towing the chassis to which the device is affixed. Thus, a dynamic association can be created between these assets and displayed to the customer, transport operator, or others.

This calculation may be carried out while the device and the tag are both in motion. A user may be interested in which truck has begun to transport the chassis, and transport may begin when motion is detected. Another consideration is that a stationary device and all stationary tags in the immediate vicinity would be in fixed relative position to each other. If the device and the tag are both in motion, it would be significantly less likely that they are in fixed relative position to each other unless the tag is attached to the truck that is towing the device-tracked chassis. This analysis can be repeated using other frequency ranges supported by the devices (e.g., Sub-GHz, 2.4GHz). Transmissions on different frequencies may produce different RSSI results in the same physical environment, so repeating this calculation may allow additional points of data to be gained and additional confidence on the relative motion of the device and surrounding tags. Any steps disclosed herein may be performed by a processor (e.g., a processor of the tag, the device mounted to and tracking the chassis, a processor of a network, and/or a processor at any other suitable location).

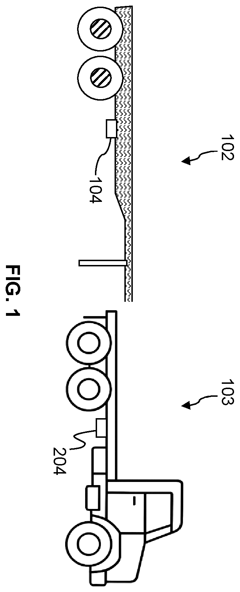

Referring to FIG. 1, a chassis 102 is provided. There may be a device 104 mounted to the chassis 102. While in FIG. 1 the device 104 is shown as mounted in a specific location on the chassis 102, the device 104 may be mounted to the chassis 102 in any suitable location. The device 104 may receive data packets from a tag 204 mounted on a truck 103. The truck 103 may be configured to couple to (e.g., hitch to) the chassis 102.

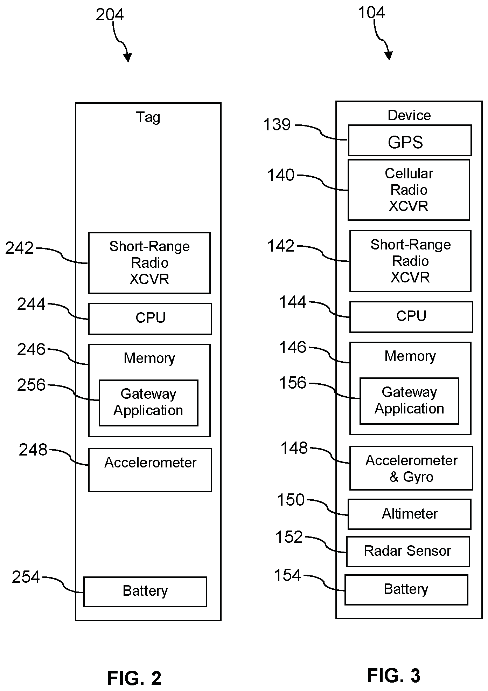

Referring to FIG. 2, the tag 204 is described in more detail. In some embodiments, the tag 204 may include short-range radio transceiver 242, a processor (or CPU) 244, a memory 246, an accelerometer 248, and/or a battery 254. In some embodiments, a non-transitory portion of the memory 246 stores a gateway application 256.

The short-range radio transceiver 242 may be configured to establish a wireless communication link according to a Bluetooth, a WiFi, a ZigBee, a Bluetooth Low Energy (BLE), an IEEE 801.15, or other short-range wireless communication protocol. In some embodiments, the short-range radio transceiver 242 may be able to establish a wireless link with another radio at a distance of a maximum of 200 feet, a maximum of 150 feet, a maximum of 100 feet, a maximum of 75 feet, a maximum of 50 feet, a maximum of 40 feet, a maximum of 35 feet, or some other maximum range less than 300 feet.

The processor 244 may comprise one or more microprocessor, microcontroller, digital signal processor (DSP), application specific integrated circuit (ASIC), field programmable gate array (FPGA), or other forms of semi-conductor implemented logic processors. In some embodiments, the processor 244 is communicatively coupled to the short-range radio transceiver 242, the memory 246, and the accelerometer 248. The battery 254 may be coupled to the tag 204, whereby to provide electric power to those components. The battery 254 may be a replaceable battery and/or a rechargeable battery. In some embodiments, the tag 204 further comprises circuitry to recharge the battery 254 from an external source of power.

The accelerometer 248 may be a multi-axis accelerometer. The accelerometer 248 may comprise a 3-axis accelerometer and a 3-axis gyro scope. The accelerometer 248 may output a signal for each axis of acceleration and a signal from each axis or rotation that can be analyzed by the processor 244. Alternatively, the accelerometer 248 may analyze the indications of its axes, generate a single signal or digital message that represents the combination of the separate acceleration indications of the multiple axes, and transmit the signal or message to the processor 244.

Referring to FIG. 3, the device 104 is described in more detail. In some embodiments, the device 104 comprises a cellular radio transceiver 140, a short-range radio transceiver 142, a processor (or CPU) 144, a memory 146, an accelerometer and gyro 148, an altimeter 150, a radar sensor 152, and/or a battery 154. In some embodiments, a non-transitory portion of the memory 146 stores a gateway application 156. The cellular radio transceiver 140 may be configured to establish a wireless communication link with a cell site according to a 6G, a 5G, a Long-Term Evolution (LTE), a Code Division Multiple Access (CDMA), a Global System for Mobile communication (GSM), an Enhanced Data rates for GSM Evolution (EDGE), and/or a Universal Terrestrial Radio Access Network (UTRAN) telecommunications protocol.

The short-range radio transceiver 142 may be configured to establish a wireless communication link according to a Bluetooth, a WiFi, a ZigBee, a Bluetooth Low Energy (BLE), an IEEE 801.15, or other short-range wireless communication protocol. In some embodiments, the short-range radio transceiver 142 may be able to establish a wireless link with another radio at a distance of a maximum of 200 feet, a maximum of 150 feet, a maximum of 100 feet, a maximum of 75 feet, a maximum of 50 feet, a maximum of 40 feet, a maximum of 35 feet, or some other maximum range less than 300 feet. In some embodiments, the cellular radio transceiver 140 may be able to establish a wireless link with a cell site at a distance of a maximum of 20 miles, a maximum of 15 miles, a maximum of 10 miles, a maximum of 7 miles, a maximum of 5 miles, a maximum of 3 miles, or some other maximum range greater than 1 mile. In some embodiments, some instances of the device 104 may have only the short-range radio transceiver 142 and may not have the cellular radio transceiver 140.

The processor 144 may comprise one or more microprocessor, microcontroller, digital signal processor (DSP), application specific integrated circuit (ASIC), field programmable gate array (FPGA), or other forms of semi-conductor implemented logic processors. In some embodiments, the processor 144 is communicatively coupled to the cellular radio transceiver 140, the short-range radio transceiver 142, the memory 146, the accelerometer and gyro 148, the altimeter 150, and the optional radar sensor 152. The battery 154 may be coupled to the device 104, whereby to provide electric power to those components. The battery 154 may be a replaceable battery and/or a rechargeable battery. In some embodiments, the device 104 further comprises circuitry to recharge the battery 154 from an external source of power.

The accelerometer and gyro 148 may be a multi-axis accelerometer. The accelerometer and gyro 148 may comprise a 3-axis accelerometer and a 3-axis gyro scope. The accelerometer and gyro 148 may output a signal for each axis of acceleration and a signal from each axis or rotation that can be analyzed by the processor 144. Alternatively, the accelerometer and gyro 148 may analyze the indications of its axes, generate a single signal or digital message that represents the combination of the separate acceleration indications of the multiple axes, and transmit the signal or message to the processor 144. The altimeter 150 outputs a signal that can be analyzed by the processor 144 to determine an elevation of the device 104 (and by implication the elevation of the transport chassis to which the device 104 is mounted). Alternatively, the altimeter 150 analyzes indications of elevation, generates a signal or message that represents the elevation determined by the altimeter 150, and transmits the signal or message to the processor 144. In some embodiments, the altimeter 150 senses air pressure and provides elevation information that is based on the sensed air pressure. In some embodiments, the altimeter 150 may send raw sensor data that must be converted by the processor 144 and/or by the gateway application 156 to an equivalent elevation. Alternatively, in another embodiment, the altimeter 150 may convert pressure sensor data to an equivalent or related elevation and output the elevation information. The altimeter 150 may be said in some contexts to sense barometric pressure. The optional radar sensor 152 may employ a millimeter wave (mmWave) transceiver to determine a distance between the device 104 and a proximate surface, such as an adjacent transport chassis. The radar sensor 152 may send an indication of the distance to the processor 144.

In some embodiments, the device 104 may comprise a global navigation satellite system (GNSS) chip or a global positioning system (GPS) chip 139 that determines location based on signals received from satellites, and the GNSS chip or GPS chip 139 may provide the location of the device 104. In another embodiment, the device 104 may determine its location using triangulation location techniques based on received signal strength of radio signals received by the cellular radio transceiver 140 from a plurality of cell sites. The device 104 may rely on GNSS chip or GPS chip 139 location information at some times and rely on cell site triangulation techniques to locate itself at other times.

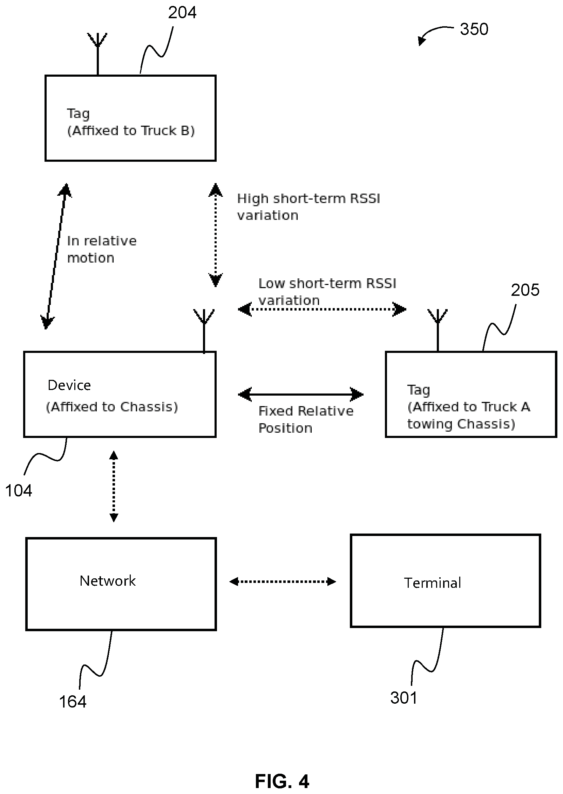

Referring to FIG. 4, a system 350 for tracking coupling of shipping equipment is shown. The system 350 includes the device 104 for tracking coupling of shipping equipment and may include a receiver (e.g., short-range radio transceiver 142) configured to receive a signal from a tag 204 affixed to a truck 103. The first signal may include packets separated by a time interval. The device 104 may further include a processor (e.g., CPU 144) configured to calculate a metric of variability of signal strength of the packets, and determine that a chassis to which the device 104 is affixed is coupled to the truck 103, in response to determining that the metric is less than a threshold (e.g., and detecting that the device 104 is in motion). The device 104 may further include a transmitter (e.g., cellular radio transceiver 140) configured to transmit a second signal to a network 164. The second signal may include information that the chassis is coupled to the truck 103. In some embodiments, the metric is variance. In some embodiments, the threshold variance is 20 (dBm)² (e.g., 10 to 50, 15-30, or 18-22 (dBm)²).

In some embodiments, the tag 204 sends information about when the tag 204 started moving. The device 104 may compare the time when the tag 204 started moving to when the device 104 started moving, and based on the comparison, determine whether the tag 204 and the device 104 are in fixed relation to one another. A metric of the difference of the starting times may be used to supplement or replace the RSSI metric.

The tag 204 may send the first signal in response to sensing that acceleration from the accelerometer 248 of the tag 204 exceeds a threshold. The network 164 may receive the second signal and determine, based on the information, whether the chassis 102 being coupled to the truck 103 is in accordance with a logistical plan. In response to determining that the chassis 102 being coupled to the truck 103 is not in accordance with the logistical plan, generate an alert, and transmit the alert to a terminal 301 associated with a driver of the truck 103. A terminal 301 may display the information that the chassis 102 is coupled to the truck 103.

The packets may include groups of packets that are spaced apart from each other by a time period greater than the time interval by at least an order of magnitude. The metric of variability may include a maximum value or an average value of a set of variances. Each variance of the set of variances may be a variance of signal strength of packets of one of the groups of packets. In some embodiments, the variance is combined with other metrics such as weighted scores of a number of pings received, a delta between a time that the tag started moving and a time that the device started moving, and/or any other suitable metrics.

The tag 204 may include an accelerometer 248 configured to measure acceleration of the tag 204. The tag 204 may further include a first processor (e.g., CPU 244) configured to generate packets separated by a time interval, in response to the acceleration exceeding a threshold. The tag 204 may further include a first transmitter (e.g., short-range radio transceiver 242) configured transmit a first signal. The first signal may include the packets separated by the time interval. The system 350 may further include the device 104, which may be configured to be affixed to a chassis 102. The device 104 may include a receiver (e.g., short-range radio transceiver 142) configured to receive the first signal, a second processor (e.g., CPU 144) configured to calculate a metric of variability of signal strength of the packets, and may determine that a chassis to which the device is affixed is coupled to the truck 103, in response to determining that the metric is less than a threshold (e.g., and in response to detecting that the device 104 and/or the tag 204 are in motion). The device 104 may further include a second transmitter (e.g., cellular radio transceiver 140) configured to transmit a second signal. The second signal may include information that the chassis is coupled to the truck 103. In some embodiments, the short-range radio transceiver 242 is replaced with a transmitter (e.g., with no receiver). In some embodiments involving the short-range radio transceiver 242, in response to the device 104 detecting that the chassis 102 is affixed to the truck 103, the device 104 uses the short-range radio transceiver 142 to send a message to the tag 204 via the short-range radio transceiver 242. The message may comprise instructions for the tag 204 to stop transmitting packets. In response to receiving the message, the tag 204 may stop transmitting packets until the accelerometer 248 detects that the tag 204 is at rest. After detecting that the tag 204 is at rest, and in response to detecting that the tag 204 is again in motion, the tag 204 may resume sending packets. In some embodiments, the tag 204 may send packets in response to the accelerometer 248 detecting that the tag 204 stops. That is, the tag 204 may send packets upon stopping. In some embodiments, the tag 204 may send packets in response to the accelerometer 248 detecting that the tag 204 restarts. That is, the tag 204 may send packets upon restarting.

In the particular example of FIG. 4, there are two tags 204, 205 within range of the device 104. In response to detecting that the device 104 is moving (e.g., based on accelerometer data from the device 104), the device 104 may listen for signals. In response detecting that the tags 204, 205 are moving (e.g., based on accelerometer data from the tags 204, 205), the tags 204, 205 may each transmit a signal. The device 104 may listen to the signals and analyze it. The signal from the tag 204 that is attached to truck B may have a variability metric greater than a threshold (e.g., a relatively high short-term RSSI variation). Based on this, the processor may determine that truck B is not affixed to the chassis 102 to which the device 104 is affixed. The signal from the tag 205 that is attached to truck A may have a variability metric less than a threshold (e.g., a relatively low short-term RSSI variation). Based on this, it may be determined that truck A is affixed to the chassis 102 to which the device 104 is affixed.

The information that the chassis is affixed to truck A may be communicated (e.g., via cellular signal or otherwise) to a network 164. The network 164 may communicate with a terminal 301 to convey that information, as well as to computer systems as will be further described below, and provide an overview of a fleet of vehicles and/or chassis. These computer systems may be located, for example, at a command center for a fleet of transportation assets. The computer system may also provide an overview of schedules, shipment origins, shipment destinations, shipment routes, and/or cargo being shipped. In some embodiments, the terminal 301 may be a cellular device, for example, a cellular device of a driver of truck A. If the network 164 determines that the chassis 102 should not be affixed to truck A (e.g., due to mistake), an alert may be sent to the cellular device, which may alert the driver of the improper connection. This may advantageously prevent the cargo the chassis is carrying from being transported to the wrong location, which can prevent fuel from being wasted and schedules from being disrupted.

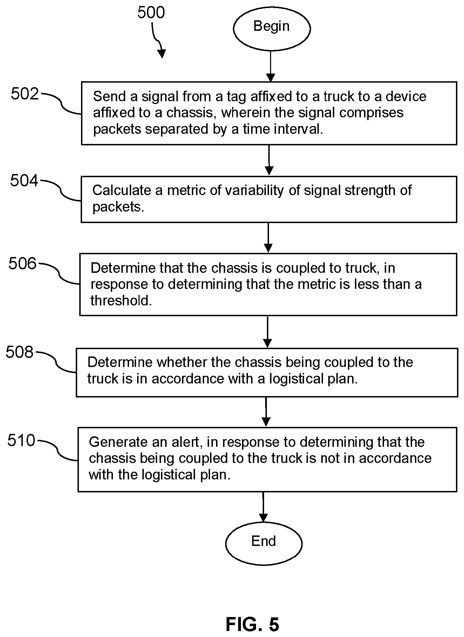

Referring to FIG. 5, a processor-implemented method 500 for tracking coupling of shipping equipment may include the step 502 of sending a signal (e.g., an RF signal) from a tag 204 (e.g., an electronic device) affixed to a truck 103 to a device 104 (e.g., another electronic device) affixed to a chassis 102 (e.g., a chassis for carrying cargo), wherein the signal includes packets (e.g., pulses) separated by a time interval. The method 500 includes step 504 of calculating (e.g., by a processor) a metric of variability (e.g., variance) of the signal strength of packets, and the step 506 of determining that the chassis 102 is coupled to the truck 103, in response to determining that the metric is less than a threshold (e.g., based on a result of comparing the metric to the threshold, in response to detecting that magnitude of acceleration of an accelerometer and gyro 148 of the device 104 exceeds a threshold). The method 500 also includes the step 508 of determining whether the chassis 102 being coupled to the truck 103 is in accordance with a logistical plan (e.g., by determining whether the logistical plan includes the chassis 102 being coupled to the truck 103 at the present time), and the step 510 of generating an alert (e.g., a message sent to a terminal of a driver of the truck 103 to which the device 104 is affixed), in response to determining that the chassis 102 being coupled to the truck 103 is not in accordance with the logistical plan.

The sending of the first signal may include measuring, by an accelerometer 248 of the tag 204, an acceleration of the tag 204; generating the packets, by a processor 244 of the tag, in response to detecting that the acceleration exceeds a threshold; and sending the first signal by a short-range radio transceiver 242 of the tag 204 (e.g., an RF transmitter). In some embodiments, the tag 204 does not include a GPS and/or a cellular radio, but instead only includes a short-range radio transceiver 242 (e.g. Bluetooth, WiFi, Zigbee, etc.). The device 104 may activate listening for packets, in response to detecting that the device 104 is in motion (e.g., by detecting that an acceleration measured by an accelerometer and gyro 148 of the device 104 exceeds a threshold and/or GPS data of a GNSS chip or GPS chip 139 of the device 104 indicates that the device 104 is in motion). In some embodiments, the device 104 does not listen for packets from tags when it is determined, based on the accelerometer data, that the device 104 is stationary. In some embodiments, in response to receiving the packets, the device 104 may send a signal (e.g., RF signal) to the tag 204 with instructions for the tag 204 to cease sending packets. The tag 204 may cease sending packets in response to the instructions, which may be advantageous for saving power. In the absence of the instructions, the tag 204 may continue sending packets.

The sending of the first signal from the tag 204 may include sending, by a short-range radio transceiver 242 of the tag 204, groups of packets that are spaced apart from each other by a time period greater than the time interval by at least an order of magnitude, in response to detecting that an acceleration of the tag 204 exceeds a threshold. The metric of variability may include a maximum value of a set of variances, wherein each variance of the set of variances is a variance of signal strength of packets of one of the groups of packets. The metric of variability may include an average value of a set of variances, wherein each variance of the set of variances is a variance of signal strength of packets of one of the group of packets.

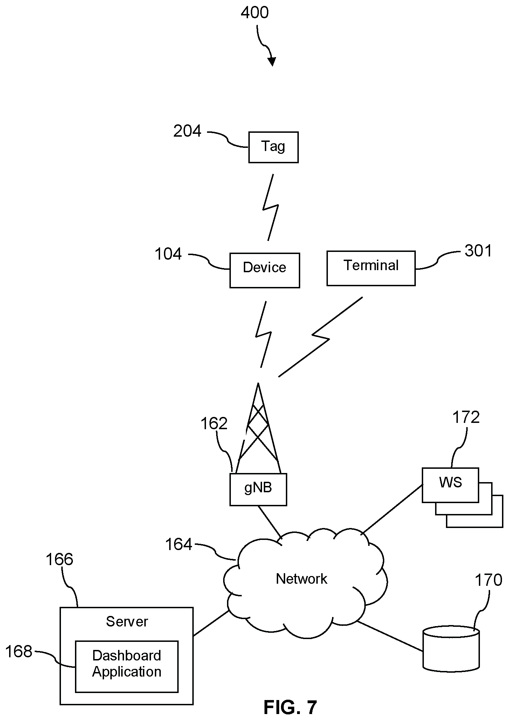

The calculating of the metric of variability may include calculating, by the device (e.g., a processor 144 of the device 104), the metric of variability, which may be variance. Alternatively, the calculating of the metric of variability may include transmitting, by the device 104, the metric of variability to a server 166 (shown in FIG. 7), and calculating, by the server 166, the metric of variability. In some embodiments, the metric of variability is standard deviation, average value, or any other suitable metric of variability. In some embodiments, link quality indicator (LQI) is additionally or alternatively used as a metric. In some embodiments, modulation of the signal is used to obtain the LQI. The metric of variability may be calculated for a string of pulses that are each separated by an interval. In some embodiments, the metric of variability may be modulation error, for example, error vector magnitude (EVM). In some embodiments, it is determined that the truck 103 is connected to the chassis 102 in response to the EVM being lower than a threshold.

The tag 204 may transmit identification information of the truck 103 to the device 104. The device 104 may transmit the identification information of the truck 103 and identification information of the chassis 102 to a server 166, further described below. The transmission of the identification information to the server 166 may occur in response to the device 104 determining that the truck 103 and the chassis 102 are in a fixed relationship, or the transmission of the identification information to the server 166 may occur in response to the device 104 receiving the packets from the tag 204. The identification information may include, for example, serial number of the vehicle, chassis, VIN number of the vehicle, or any other information that can be used to identify the vehicle and/or the chassis. Further, the tag 204 may communicate to the server 166 the identification information of the truck 103 that is connected to the chassis 102.

The determining of whether the chassis 102 is coupled to the truck 103 may include providing a confidence metric of the chassis 102 being coupled to the truck 103 based on the variability metric and/or a difference in a time that movement of the chassis 102 was detected and a time that movement of the truck 103 was detected. The confidence metric can be transmitted to the server 166, via network 164, along with the information that the chassis 102 is coupled to the truck 103.

The determining of whether the chassis 102 being coupled to the truck 103 is in accordance with the logistical plan may include ascertaining, by a server 166, whether the logistical plan includes the chassis 102 being coupled to the truck 103 at a present time. For example, the server 166 could receive the information that the truck 103 is coupled to the chassis 102, search a list of presently-joined trucks and chassis, and determine that the truck 103 being coupled to the chassis 102 is part of the logistical plan based on that information. The server 166 may also be updated to reflect that confirmed joining of the truck 103 and the chassis 102. The server 166 may provide a notification that the truck 103 and the chassis 102 are joined and provide such information to interested parties, such as customers, or other entities. In response to the joined truck 103 and chassis 102 not being found in the list, the server 166 may generate an alert.

The method 500 may further include transmitting, by the server 166, the alert to a terminal 301 associated with the truck 103 or associated with a driver of truck 103. The terminal 301 may be, for example, a mobile phone. The alert may be in the form of an SMS or a notification on an app that runs on the phone. In some embodiments, the truck 103 is returned to the point at which the chassis 102 was joined to the truck 103 in response to the alert being received. In some embodiments, a path of a self-driving truck is altered in response to receiving the alert (e.g., to correct a logistical mishap due to the truck-chassis mismatch). In some embodiments, the alert is sent to a terminal 301 of a dispatcher that directs a path of the truck 103 in response to receiving the alert.

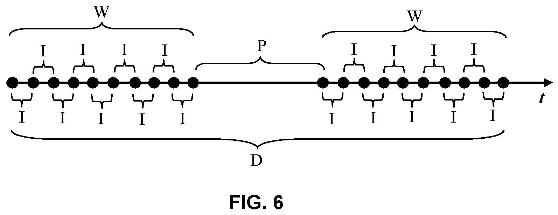

FIG. 6 is a conceptual illustration of the transmission from the tag according to an embodiment. FIG. 6 may not be drawn to scale. FIG. 6 shows two groups of pulses from the tag (ten pulses each). Each pulse may include one or more data packets. The pulses are represented by dots on a timeline. Each pulse of the groups of pulses may be separated from each other by an interval I and may occur in a window W. The groups of pulses (and the windows W) may be separated by a time period P. Although FIG. 6 shows only two groups of pulses, in some embodiments, there are ten groups (e.g., 1, 2, 3, 4, 5, 6, 7, 8, 9, 10, 11, 12, or more groups). The pulses may last for a duration D. In some embodiments, the window W is at least an order of magnitude longer than the interval I. In some embodiments, the time period P is at least six times longer than the interval I. In some embodiments, the duration D is at least an order of magnitude longer than the time period P and/or at least an order of magnitude longer than the window W.

In some embodiments, the interval I is 1 second (e.g., 0.1 to 10 seconds, 0.5 to 5 seconds, 0.5 to 1.5 seconds, or 0.8 to 1.2 seconds). In some embodiments, there are 10 packets per window W (e.g., 1 to 100, 5 to 50, 5 to 15, or 8 to 12 packets). In some embodiments, the windows W are each 10 seconds long (e.g., 5 to 15 seconds, 8 to 12 seconds, or 9 to 11 seconds). This may help obtain consistent measurements because at long time periods, the RF characteristics may change, for example, due to noise or Raleigh fading. In some embodiments, multiple bands are used for sending the packets. In some embodiments, instead of sending a single packet at each interval, multiple packets are sent at each interval. The duration D may be, for example 15 minutes (e.g., 5 to 60 minutes, 10 to 20 minutes, or 13 to 17 minutes). In some embodiments, after the duration D is complete, there may be a waiting period. The waiting period may be, for example, 3 hours (e.g., 1 to 5 hours, 2 to 4 hours, or 2.5 to 3.5 hours). Then, after the waiting period, additional pulses may be sent over an additional duration.

In some embodiments, variance of the signal strength of the pulses of each group (e.g., over each window W) are calculated. In this particular example, the variance of signal strength of the first ten pulses would be calculated and the variance of the signal strength of the following ten pulses would be calculated. The processor may determine whether an average of these variances is less than a threshold. In response to the average being less than the threshold, the processor may determine that the chassis and the truck are joined. Alternatively, the processor may determine a maximum of the two variances. In response to the maximum variance being less than the threshold, the processor may determine that the chassis and the truck are joined. This method of calculating the metric of variability may be applied to any number of groups of pulses. However, a number of groups of pulses of approximately 15 may be advantageous for balancing quantity of data against changing conditions.

The system and method of the present disclosure may improve the technological field of shipping logistics by detecting that a chassis is coupled to a truck and checking whether that coupling is correct according to the logistical plan. By timely sending the alert when the coupling is not correct, the system and method of the present disclosure may avoid costly mistakes, wasted fuel, lost product, and/or delayed shipment. In addition, the system and method of the present disclosure may solve the technical problem of inferring the coupling; the system and method may use the variability metric of the signal strength of the packets to accurately detect coupling even though the tag may not have a GPS unit nor cellular modem and even though no user input may be provided, thus surpassing the capabilities of the conventional art.

Referring to FIG. 7, a system 400 is described. The system 400 may include the tag 204, the device 104, and the terminal 301. The device 104 may receive a signal from the tag 204 via RF communication. The network 164 may receive a communication from the device 104 via a cellular communication link using the cell site 162 and forward it to a server 166. Based on that communication, the server 166 may send a communication (e.g., an alert) to the terminal 301 via a cellular communication link using the network 164 and the cell site 162.

In some embodiments, the server 166 is communicatively coupled to the network 164 and is communicatively coupled, via the network 164, to a data store 170. The server 166 executes a dashboard application 168. In some embodiments, the server 166 may be provided by a cloud computing provider as leased computing resources, such as Amazon Web Services (AWS). The dashboard application 168 may execute on a virtual server in a cloud computing environment. In some embodiments, the data store 170 may be provided by a cloud computing provider as leased storage resources.

In some embodiments, the system 400 comprises a plurality of user workstations 172. Users can use the workstations 172 to log into a user interface of the dashboard application 168. The information and access by users via the workstations 172 to the dashboard application 168 promotes improved coordination among container ships, railroad operators, and transport chassis and trucking companies, whereby to minimize delays of transporting intermodal containers via transport chassis.

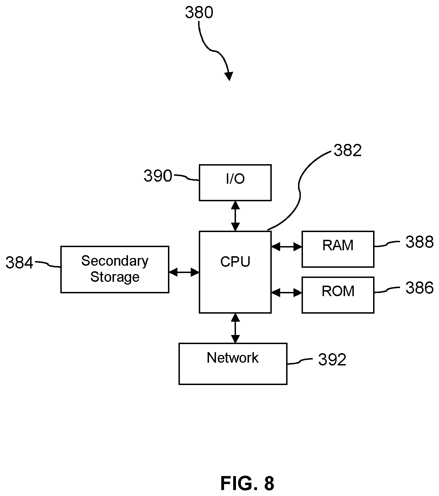

FIG. 8 illustrates a computer system 380 suitable for implementing one or more embodiments disclosed herein. The computer system 380 includes a central processing unit (CPU) 382 that is in communication with memory devices including secondary storage 384, read only memory (ROM) 386, random access memory (RAM) 388, input/output (I/O) devices 390, and network connectivity devices 392. The CPU 382 may be implemented as one or more CPU chips.

It is understood that by programming and/or loading executable instructions onto the computer system 380, at least one of the CPU 382, the RAM 388, and the ROM 386 are changed, transforming the computer system 380 in part into a particular machine or apparatus having the novel functionality taught by the present disclosure. It is fundamental to the electrical engineering and software engineering arts that functionality that can be implemented by loading executable software into a computer can be converted to a hardware implementation by well-known design rules. Decisions between implementing a concept in software versus hardware typically hinge on considerations of stability of the design and numbers of units to be produced rather than any issues involved in translating from the software domain to the hardware domain. Generally, a design that is still subject to frequent change may be preferred to be implemented in software, because re-spinning a hardware implementation is more expensive than re-spinning a software design. Generally, a design that is stable that will be produced in large volume may be preferred to be implemented in hardware, for example in an application specific integrated circuit (ASIC), because for large production runs the hardware implementation may be less expensive than the software implementation. Often a design may be developed and tested in a software form and later transformed, by well-known design rules, to an equivalent hardware implementation in an application specific integrated circuit that hardwires the instructions of the software. In the same manner as a machine controlled by a new ASIC is a particular machine or apparatus, likewise a computer that has been programmed and/or loaded with executable instructions may be viewed as a particular machine or apparatus.

Additionally, after the computer system 380 is turned on or booted, the CPU 382 may execute a computer program or application. For example, the CPU 382 may execute software or firmware stored in the ROM 386 or stored in the RAM 388. In some cases, on boot and/or when the application is initiated, the CPU 382 may copy the application or portions of the application from the secondary storage 384 to the RAM 388 or to memory space within the CPU 382 itself, and the CPU 382 may then execute instructions that the application is comprised of. In some cases, the CPU 382 may copy the application or portions of the application from memory accessed via the network connectivity devices 392 or via the I/O devices 390 to the RAM 388 or to memory space within the CPU 382, and the CPU 382 may then execute instructions that the application is comprised of. During execution, an application may load instructions into the CPU 382, for example load some of the instructions of the application into a cache of the CPU 382. In some contexts, an application that is executed may be said to configure the CPU 382 to do something, e.g., to configure the CPU 382 to perform the function or functions promoted by the subject application. When the CPU 382 is configured in this way by the application, the CPU 382 becomes a specific purpose computer or a specific purpose machine.

The secondary storage 384 is typically comprised of one or more disk drives or tape drives and is used for non-volatile storage of data and as an over-flow data storage device if RAM 388 is not large enough to hold all working data. Secondary storage 384 may be used to store programs which are loaded into RAM 388 when such programs are selected for execution. The ROM 386 is used to store instructions and perhaps data which are read during program execution. ROM 386 is a non-volatile memory device which typically has a small memory capacity relative to the larger memory capacity of secondary storage 384. The RAM 388 is used to store volatile data and perhaps to store instructions. Access to both ROM 386 and RAM 388 is typically faster than to secondary storage 384. The secondary storage 384, the RAM 388, and/or the ROM 386 may be referred to in some contexts as computer readable storage media and/or non-transitory computer readable media.

I/O devices 390 may include printers, video monitors, liquid crystal displays (LCDs), touch screen displays, keyboards, keypads, switches, dials, mice, track balls, voice recognizers, card readers, paper tape readers, or other well-known input devices.

The network connectivity devices 392 may take the form of modems, modem banks, Ethernet cards, universal serial bus (USB) interface cards, serial interfaces, token ring cards, fiber distributed data interface (FDDI) cards, wireless local area network (WLAN) cards, radio transceiver cards, and/or other well-known network devices. The network connectivity devices 392 may provide wired communication links and/or wireless communication links (e.g., a first network connectivity device 392 may provide a wired communication link and a second network connectivity device 392 may provide a wireless communication link). Wired communication links may be provided in accordance with Ethernet (IEEE 802.3), Internet protocol (IP), time division multiplex (TDM), data over cable service interface specification (DOCSIS), wavelength division multiplexing (WDM), and/or the like. In some embodiments, the radio transceiver cards may provide wireless communication links using protocols such as code division multiple access (CDMA), global system for mobile communications (GSM), long-term evolution (LTE), WiFi (IEEE 802.11), Bluetooth, Zigbee, narrowband Internet of things (NB IoT), near field communications (NFC), radio frequency identity (RFID). The radio transceiver cards may promote radio communications using 5G, 5G New Radio, or 5G LTE radio communication protocols. These network connectivity devices 392 may enable the CPU 382 to communicate with the Internet or one or more intranets. With such a network connection, it is contemplated that the CPU 382 might receive information from the network, or might output information to the network in the course of performing the above-described method steps. Such information, which is often represented as a sequence of instructions to be executed using CPU 382, may be received from and outputted to the network, for example, in the form of a computer data signal embodied in a carrier wave.

Such information, which may include data or instructions to be executed using CPU 382 for example, may be received from and outputted to the network, for example, in the form of a computer data baseband signal or signal embodied in a carrier wave. The baseband signal or signal embedded in the carrier wave, or other types of signals currently used or hereafter developed, may be generated according to several methods well-known to one skilled in the art. The baseband signal and/or signal embedded in the carrier wave may be referred to in some contexts as a transitory signal.

The CPU 382 executes instructions, codes, computer programs, scripts which it accesses from hard disk, floppy disk, optical disk (these various disk-based systems may all be considered secondary storage 384), flash drive, ROM 386, RAM 388, or the network connectivity devices 392. While only one CPU 382 is shown, multiple processors may be present. Thus, while instructions may be discussed as executed by a processor, the instructions may be executed simultaneously, serially, or otherwise executed by one or multiple processors. Instructions, codes, computer programs, scripts, and/or data that may be accessed from the secondary storage 384, for example, hard drives, floppy disks, optical disks, and/or other device, the ROM 386, and/or the RAM 388 may be referred to in some contexts as non-transitory instructions and/or non-transitory information.

In some embodiments, the computer system 380 may comprise two or more computers in communication with each other that collaborate to perform a task. For example, but not by way of limitation, an application may be partitioned in such a way as to permit concurrent and/or parallel processing of the instructions of the application. Alternatively, the data processed by the application may be partitioned in such a way as to permit concurrent and/or parallel processing of different portions of a data set by the two or more computers. In some embodiments, virtualization software may be employed by the computer system 380 to provide the functionality of a number of servers that is not directly bound to the number of computers in the computer system 380. For example, virtualization software may provide twenty virtual servers on four physical computers. In some embodiments, the functionality disclosed above may be provided by executing the application and/or applications in a cloud computing environment. Cloud computing may comprise providing computing services via a network connection using dynamically scalable computing resources. Cloud computing may be supported, at least in part, by virtualization software. A cloud computing environment may be established by an enterprise and/or may be hired on an as-needed basis from a third party provider. Some cloud computing environments may comprise cloud computing resources owned and operated by the enterprise as well as cloud computing resources hired and/or leased from a third party provider.

In some embodiments, some or all of the functionality disclosed above may be provided as a computer program product. The computer program product may comprise one or more computer readable storage medium having computer usable program code embodied therein to implement the functionality disclosed above. The computer program product may comprise data structures, executable instructions, and other computer usable program code. The computer program product may be embodied in removable computer storage media and/or non-removable computer storage media. The removable computer readable storage medium may comprise, without limitation, a paper tape, a magnetic tape, magnetic disk, an optical disk, a solid-state memory chip, for example analog magnetic tape, compact disk read only memory (CD-ROM) disks, floppy disks, jump drives, digital cards, multimedia cards, and others. The computer program product may be suitable for loading, by the computer system 380, at least portions of the contents of the computer program product to the secondary storage 384, to the ROM 386, to the RAM 388, and/or to other non-volatile memory and volatile memory of the computer system 380. The CPU 382 may process the executable instructions and/or data structures in part by directly accessing the computer program product, for example by reading from a CD-ROM disk inserted into a disk drive peripheral of the computer system 380. Alternatively, the CPU 382 may process the executable instructions and/or data structures by remotely accessing the computer program product, for example by downloading the executable instructions and/or data structures from a remote server through the network connectivity devices 392. The computer program product may comprise instructions that promote the loading and/or copying of data, data structures, files, and/or executable instructions to the secondary storage 384, to the ROM 386, to the RAM 388, and/or to other non-volatile memory and volatile memory of the computer system 380.

In some contexts, the secondary storage 384, the ROM 386, and the RAM 388 may be referred to as a non-transitory computer readable medium or a computer readable storage media. A dynamic RAM embodiment of the RAM 388, likewise, may be referred to as a non-transitory computer readable medium in that while the dynamic RAM receives electrical power and is operated in accordance with its design, for example during a period of time during which the computer system 380 is turned on and operational, the dynamic RAM stores information that is written to it. Similarly, the CPU 382 may comprise an internal RAM, an internal ROM, a cache memory, and/or other internal non-transitory storage blocks, sections, or components that may be referred to in some contexts as non-transitory computer readable media or computer readable storage media.

As used herein, the term "or" does not require selection of only one element. Thus, the phrase "A or B" is satisfied by either one or both elements from the set {A, B}. A clause that recites "A or B" can be satisfied with only one of the listed items, both of the listed items, multiples of the listed items, and one or both of the listed items and another item not listed. The phrase "A, B, or C" is satisfied by any one or any combination of any two or more from the set {A, B, C}. A clause that recites "A, B, or C" can be satisfied with only one of the listed items, multiples of the listed items, and one or more of the items from the list and another item not listed.

As used herein, the article "a" means "one or more." As used herein, the article "an" means "one or more." As used herein, the article "the" when referring to a singular noun means "the one or more." Thus, the phrase "an element" means "one or more elements;" and the phrase "the element" means "the one or more elements."

As used herein, the term "and/or" includes any combination of the elements associated with the "and/or" term. Thus, the phrase "A, B, and/or C" includes any of A alone, B alone, C alone, A and B together, B and C together, A and C together, or A, B, and C together.

While several embodiments have been provided in the present disclosure, it should be understood that the disclosed systems and methods may be embodied in many other specific forms without departing from the spirit or scope of the present disclosure. The present examples are to be considered as illustrative and not restrictive, and the intention is not to be limited to the details given herein. For example, the various elements or components may be combined or integrated in another system or certain features may be omitted or not implemented.

Also, techniques, systems, subsystems, and methods described and illustrated in the various embodiments as discrete or separate may be combined or integrated with other systems, modules, techniques, or methods without departing from the scope of the present disclosure. Other items shown or discussed as directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the spirit and scope disclosed herein.

## Claims

1. A device for tracking coupling of shipping equipment, comprising:
a receiver configured to receive a first signal from a second device, wherein the first signal comprises packets separated by a time interval;
a processor configured to calculate a metric of variability of the packets, and determine based on the metric of variability whether the first signal is being transmitted from a location that is maintaining continuous relative distance to the device; and
a transmitter configured to transmit a second signal to a network, wherein the second signal comprises information related to whether the first signal is being transmitted from the location that is maintaining continuous relative distance to the device.

2. The device of claim 1, wherein:
the second device comprises a tag affixed to a truck,
the device is affixed to a chassis,
the metric of variability comprises a metric of variability of signal strength of the first signal, and
the determining based on the metric of variability whether the first signal is being transmitted from the location that is maintaining continuous relative distance to the device comprises determining that the chassis is attached to the truck in response to the metric being less than a threshold.

3. The device of claim 2, wherein the tag is configured to send the first signal in response to acceleration of the tag exceeding a threshold.

4. The device according to claim 2 or 3, wherein the network is configured to:
receive the second signal,
determine, based on the information, whether the chassis being coupled to the truck is in accordance with a logistical plan,
in response to determining that the chassis being coupled to the truck is not in accordance with the logistical plan, generate an alert, and
transmit the alert to a terminal associated with a driver of the truck.

5. The device according to any one of claims 2 to 4, wherein the packets comprise groups of packets that are spaced apart from each other by a time period greater than the time interval by at least an order of magnitude.

6. The device of claim 5, wherein the metric of variability comprises a maximum value of a set of variances, wherein each variance of the set of variances is a variance of signal strength of packets of one of the groups of packets; or, wherein the metric of variability comprises an average value of a set of variances, wherein each variance of the set of variances is a variance of signal strength of packets of one of the groups of packets.

7. A method for tracking coupling of shipping equipment, comprising:
receiving, by a receiver of a device, a first signal from a second device, wherein the first signal comprises packets separated by a time interval;
calculating, by a processor, a metric of variability of the packets;
determining, by the processor, based on the metric of variability, whether the first signal is being transmitted from a location that is maintaining continuous relative distance to the device; and
transmitting, by a transmitter, a second signal to a network, wherein the second signal comprises information related to whether the first signal is being transmitted from the location that is maintaining continuous relative distance to the device.

8. The method of claim 7, wherein:
the second device comprises a tag affixed to a truck,
the device is affixed to a chassis,
the metric of variability comprises a metric of variability of signal strength of the first signal, and
the determining based on the metric of variability whether the first signal is being transmitted from the location that is maintaining continuous relative distance to the device comprises determining that the chassis is attached to the truck in response to the metric being less than a threshold.

9. The method of claim 8, wherein the tag is configured to send the first signal by:
measuring, by an accelerometer of the tag, an acceleration of the tag,
generating the packets, by a processor of the tag, in response to the acceleration exceeding a threshold, and
sending the first signal by a transmitter of the tag.

10. The method according to claim 8 or 9, wherein the calculating of the metric of variability comprises:
calculating, by the device, the metric of variability, or
transmitting, by the device, the metric of variability to a server, and calculating, by the server, the metric of variability.

11. The method according to any one of claims 8 to 10, further comprising:
determining whether the chassis being coupled to the truck is in accordance with a logistical plan by ascertaining, by a server, whether the logistical plan includes the chassis being coupled to the truck at a present time; and optionally
transmitting, by the server, an alert to a terminal associated with a driver of truck, in response to determining that the logistical plan does not include the chassis being coupled to the truck at the present time.

12. The method according to any one of claims 8 to 11, wherein the tag sends the first signal by sending, by a transmitter of the tag, groups of packets that are spaced apart from each other by a time period greater than the time interval by at least an order of magnitude, in response to detecting that an acceleration of the tag exceeds a threshold.

13. The method of claim 12, wherein the metric of variability comprises a maximum value of a set of variances, wherein each variance of the set of variances is a variance of signal strength of packets of one of the groups of packets; or, wherein the metric of variability comprises an average value of a set of variances, wherein each variance of the set of variances is a variance of signal strength of packets of one of the groups of packets.

14. A system for tracking coupling of shipping equipment, comprising:
a tag configured to be affixed to a truck, the tag comprising:
an accelerometer configured to measure acceleration of the tag;
a first processor configured to generate packets separated by a time interval, in response to the acceleration exceeding a threshold; and
a first transmitter configured transmit a first signal, wherein the first signal comprises the packets separated by the time interval;
a device configured to be affixed to a chassis, the device comprising:
a receiver configured to receive the first signal;
a second processor configured to calculate a metric of variability of signal strength of the packets, and determine that a chassis to which the device is affixed is coupled to the truck, in response to determining that the metric is less than a threshold; and
a second transmitter configured to transmit a second signal, wherein the second signal comprises information that the chassis is coupled to the truck.

15. The system of claim 14, further comprising:
a terminal configured to receive the information, and in response to receiving the information, display an indication that the chassis is coupled to the truck; and/or
a network, wherein the network is configured to:
receive the second signal comprising the information,
determine whether the chassis being coupled to the truck is in accordance with a logistical plan, and
in response to determining that the chassis being coupled to the truck is not in accordance with the logistical plan, generate an alert, wherein optionally the alert is transmitted from the network to a terminal associated with a driver of the truck.
